# EUROPEAN PATENT APPLICATION

(11) **EP 4 679 417 A1**
(43) Date of publication of application: **14.01.2026**
(21) Application number: 24857424.6
(22) Date of filing: 03.06.2024
(51) Int. Cl.: G10L 15/22, G10L 15/26, G06F 40/211

(54) **SPEECH PROCESSING METHOD FOR REALIZING STREAMING TTS**

(30) Priority: 23.05.2024 CN 202410648975
(71) Applicant: Shenzhen Timekettle Technologies Co., Ltd, Shenzhen, Guangdong 518000 (CN)
(72) Inventor: SHI, Wei, Shenzhen, Guangdong 518000 (CN); SHI, Qin, Shenzhen, Guangdong 518000 (CN); LI, Jiawei, Shenzhen, Guangdong 518000 (CN); ZHENG, Yuzhou, Shenzhen, Guangdong 518000 (CN)
(74) Representative: Valet Patent Services Limited
(86) International application number: PCT/CN2024/096970
(87) International publication number: WO 2025/241219

(57) **Abstract**

The present disclosure relates to a processing method for implementing a streaming TTS speech text, which comprises: a user beginning to speak and performing voice wake-up on a user terminal; the user terminal sending a streaming voice data packet to a recognition engine for speech recognition; the recognition engine continuously responding with uncertain recognition texts to the user terminal; the user terminal detecting and recognizing the uncertain recognition texts, and obtaining certain recognition texts in advance; the user terminal sending the predetermined certain recognition texts to a translation engine to perform translation and complete speech synthesis; the user terminal playing the synthesized speech. By partially determining recognition results in advance and performing translation and speech synthesis on the determined recognition results in a streaming manner, the method in the disclosure reduces the waiting time of the user before hearing the translated speech, thereby achieving the effect of manual simultaneous interpretation.

## Description

### TECHNICAL FIELD

The present disclosure pertains to the technical field of speech translation, and specifically relates to a speech processing method for implementing streaming TTS.

### BACKGROUND

With the continuous development of the internationalization process, communication between different languages is very frequent. However, the language interoperability has become an obstacle to communication between people. Most people manage to make communication in the company of interpreters, which is relatively high in cost and not convenient enough. At present, there are a lot of translation devices and translation software available on the market. These translation devices generally perform translation after a speaker finish one sentence, and proceed with feedback communication after the translation result is heard by the other party. The communication manner featured with waiting for translation is very inefficient, and affects the work efficiency.

There are also some so-called "simultaneous interpretation" devices. These devices first send voice data packets to a recognition translation engine continuously; then, the recognition translation engine continuously responds with uncertain recognition results to the "simultaneous interpretation" devices; only when a pause in a user's speech (i.e., speech pause) lasts for a certain period of time, the recognition translation engine recognizes one certain result from the previously received voice data packets, and then performs translation and speech synthesis on the certain recognition result. Although the "simultaneous interpretation" devices can realize coherent recognition and translation result feedback, due to continuous changes in the recognition content when the user speaks continuously, the user who wants to hear the translated speech output has to wait for the recognition engine to return the final certain result before synthesizing a complete recognition text and converting it into speech, which makes it impossible to achieve the same effect as manual simultaneous interpretation, where the other party can hear the translated speech before the user finishes speaking. In this case, the waiting time of the user before hearing the translated speech will be prolonged, and the problem is more prominent especially when the user expresses himself or herself continuously in long sentences.

### SUMMARY

It is an objective of the present disclosure to overcome the defects and deficiencies in the prior art and provide a speech processing method for implementing streaming TTS as applied in the field of translation. By partially determining recognition results in advance and performing translation and speech synthesis on the determined recognition results in a streaming manner, the method in the present disclosure reduces the waiting time of the user before hearing the translated speech, thereby achieving the effect of manual simultaneous interpretation.

To achieve the above objective, the present disclosure provides a speech processing method for implementing streaming TTS, which method comprises:
a user beginning to speak and performing voice wake-up on a user terminal; the user terminal sending a speech recognition request to a recognition engine; after the speech recognition request is successful, the user terminal sending a streaming voice data packet to the recognition engine for speech recognition; the recognition engine continuously responding with uncertain recognition texts to the user terminal;
the user terminal detecting and recognizing the uncertain recognition texts, which is specifically manifested as: the user terminal performs character detection on an uncertain recognition text with which the recognition engine responds each time; when it is detected that the number of characters is greater than or equal to n for the first time, n has a value of (20, 50); at this time, the uncertain recognition text is denoted as B1; the user terminal triggers the first punctuation sentence-breaking detection on the uncertain recognition text B1; subsequently, in the uncertain recognition text in the latest response, one punctuation sentence-breaking detection will be triggered every time n characters are added on the basis of the length of the uncertain recognition text B1;
every time the sentence-punctuating detection is triggered successfully, the user terminal performing a punctuation sentence-breaking detection action once; if the punctuation sentence-breaking detection of the user terminal meets sentence-punctuating conditions, judging that the sentence breaking is successful, and recognizing the uncertain recognition text before the sentence breaking as a certain recognition text for this time;
every time after determining the recognition text, the user terminal sending the certain recognition text that is determined for this time to the translation engine to perform translation and complete speech synthesis; finally, the user terminal playing the synthesized speech.

According to one embodiment of the present disclosure, every time the sentence-punctuating detection is triggered successfully, it is necessary to first determine whether the latest uncertain recognition text with which the recognition engine responds contains one or more certain recognition texts previously obtained through successful sentence breaking. If the latest uncertain recognition text contains no certain recognition texts obtained previously through successful sentence breaking, then it is directly judged whether the latest uncertain recognition text meets the punctuation sentence-breaking conditions; if the latest uncertain recognition text contains one or more certain recognition texts obtained previously through successful sentence breaking, similarities are first compared between the latest uncertain recognition text and said one or more certain recognition texts obtained previously through successful sentence breaking, said one or more certain recognition texts obtained previously are ignored, the remaining uncertain recognition text is extracted, and the punctuation sentence-breaking detection is performed on the extracted uncertain recognition text to judge whether the extracted uncertain recognition text meets the punctuation sentence-breaking conditions.

According to one embodiment of the present disclosure, the punctuation sentence-breaking conditions are that during the detection of an uncertain recognition text ready for the punctuation sentence-breaking detection, if the uncertain recognition text ready for the punctuation sentence-breaking detection contains first-type sentence-breaking punctuation marks, then it is judged that the sentence breaking is successful.

According to one embodiment of the present disclosure, if the uncertain recognition text ready for the punctuation sentence-breaking detection contains one first-type sentence-breaking punctuation mark, then the first-type sentence-breaking punctuation mark at this time is a punctuation sentence-breaking point for this time, and the uncertain recognition text before the punctuation sentence-breaking point is determined as a certain recognition text for this time.

According to one embodiment of the present disclosure, if the uncertain recognition text ready for the punctuation sentence-breaking detection contains two or more first-type sentence-breaking punctuation marks, then the last first-type sentence-breaking punctuation mark is a punctuation sentence-breaking point for this time, and the uncertain recognition text before the punctuation sentence-breaking point is determined as a certain recognition text for this time.

According to one embodiment of the present disclosure, if the uncertain recognition text ready for the punctuation sentence-breaking detection contains no first-type sentence-breaking punctuation marks, then it is detected whether it contains second-type sentence-breaking punctuation marks; if the uncertain recognition text ready for the punctuation sentence-breaking detection contains two or more second-type sentence-breaking punctuation marks, then it is judged that the sentence breaking is successful at this time, the last second-type sentence-breaking punctuation mark is used as the punctuation sentence-breaking point at this time, and the uncertain recognition text before the punctuation sentence-breaking point is determined as a certain recognition text for this time; otherwise, it is determined that the sentence breaking fails.

According to one embodiment of the present disclosure, the first-type sentence-breaking punctuation marks include periods, exclamation marks, question marks, and semicolons.

According to one embodiment of the present disclosure, the second-type sentence-breaking punctuation marks include commas.

According to one embodiment of the present disclosure, the certain recognition text obtained through punctuation sentence-breaking each time will be sent to the translation engine for translation, and the translated text will be subjected to speech synthesis; when the text that has gone through speech synthesis but not been played through the user terminal has a string length of greater than or equal to 40, the user terminal will adjust the speech playing speed thereof to 1.5 times the default value; when the text that has gone through speech synthesis but not been played through the user terminal has a string length of less than 40, the user terminal adjusts the speech playing speed thereof to the default value.

It is another objective of the present disclosure to provide another speech processing method for implementing streaming TTS, which method comprises:
a user beginning to speak and performing voice wake-up on a user terminal; the user terminal sending a speech recognition request to a recognition engine; after the speech recognition request is successful, the user terminal sending a streaming voice data packet to the recognition engine for speech recognition; the recognition engine continuously responding with uncertain recognition texts to the user terminal;
the user terminal detecting and recognizing the uncertain recognition texts, which is specifically manifested as: after continuously receiving the uncertain recognition texts with which the recognition engine responds for multiple times, the user terminal comprehensively compares and judges N uncertain recognition texts in the recent responses, and n falls within a value range of (2, 6); when M sentences that precede the N uncertain recognition texts keep recognition content unchanged and M falls within a value range of (1, 5), it is determined that the recognition content of the preceding M sentences is a certain recognition text for this time;
the user terminal sending the certain recognition text that is determined each time to the translation engine to perform translation and complete speech synthesis; finally, the user terminal playing the synthesized speech.

According to one embodiment of the present disclosure, the method further comprises: when the N uncertain recognition texts in the recent response to the user terminal contain one or more certain recognition texts that had been determined previously, comparing similarities between the N uncertain recognition texts in the recent responses and said one or more certain recognition texts that had been determined previously, ignoring said one or more certain recognition texts that had been determined previously, extracting remaining parts of the N uncertain recognition texts, then comprehensively comparing and judging the remaining parts of the N uncertain recognition texts, and when M sentences that precede the remaining parts of the N uncertain recognition texts keep recognition content unchanged, determining the recognition content of the preceding M sentences as the certain recognition text for this time.

According to one embodiment of the present disclosure, the user terminal sends the certain recognition text to the translation engine for translation each time, and performs speech synthesis on the translated text; when the text that has gone through speech synthesis but not been played through the user terminal has a string length of greater than or equal to 40, the user terminal will adjust the speech playing speed thereof to 1.5 times the default value; when the text that has gone through speech synthesis but not been played through the user terminal has a string length of less than 40, the user terminal adjusts the speech playing speed thereof to the default value.

Compared with the prior art, the present disclosure has the following beneficial effects:
1. the present disclosure performs punctuation sentence-breaking detection on the uncertain recognition text with which the recognition engine responded recently through the user terminal, determines a part of certain recognition results in advance, and sends the recognition results that have been already determined to the translation engine in a streaming manner for translation and speech synthesis; in this way, it is realized that the user terminal can obtain or determine the recognition text in advance before the recognition engine responds with the certain recognition text or final recognition text, which reduces the waiting time of users before hearing the translated speech as compared with the existing manners, thereby achieving the effect of manual simultaneous interpretation;
2. the present disclosure further comprehensively compares and judges multiple uncertain recognition texts with which the recognition engine responded recently through the user terminal, and sends the recognition results that have been already determined to the translation engine in a streaming manner for translation and speech synthesis, which can also reduce the waiting time of users before hearing the translated speech, thereby achieving the effect of manual simultaneous interpretation;
3. by judging the string length of the text that has gone through speech synthesis but not been played through the user terminal, the present disclosure dynamically adjusts the playing speed of the TTS speech text, thereby reducing the playing time of the translated speech.

### BRIEF DESCRIPTION OF THE DRAWINGS

Figure 1 is a flowchart of a speech processing method for implementing streaming TTS according to the present disclosure;
Figure 2 is a diagram of an embodiment of the present disclosure;
Figure 3 is a flowchart of another speech processing method for implementing streaming TTS according to the present disclosure.

### DETAILED DESCRIPTION

The present disclosure will be further described below in detail in combination with the embodiments and the drawings, but the manners of implementation of the present disclosure are not limited thereto.

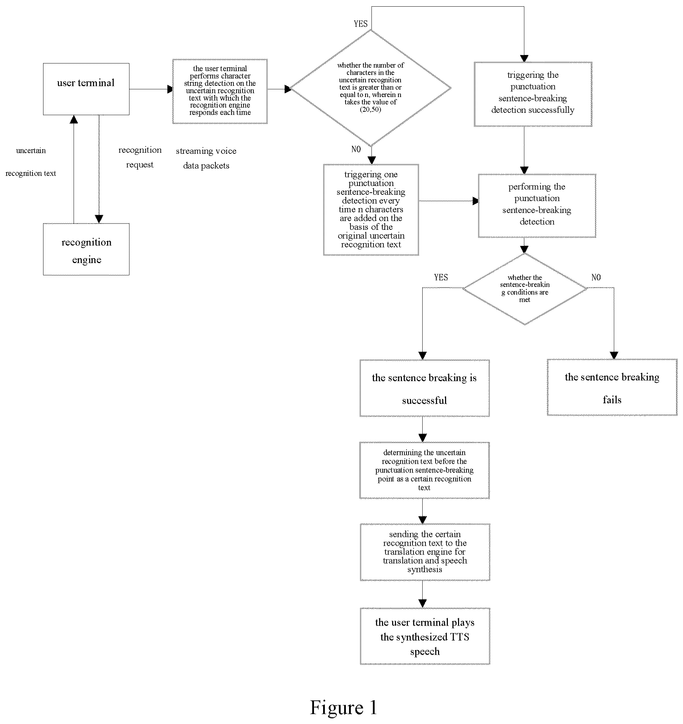

As shown in Figure 1, it is a flowchart of a speech processing method for implementing streaming TTS according to the present disclosure. The method comprises: a user beginning to speak and performing voice wake-up on a user terminal; the user terminal sending a speech recognition request to a recognition engine; after the speech recognition request is successful, the user terminal sending a streaming voice data packet to the recognition engine for speech recognition; the recognition engine continuously responding with uncertain recognition texts to the user terminal. In essence, the uncertain recognition texts in this embodiment of the present disclosure are intermediate-state recognition results sent by the recognition engine. The intermediate-state recognition results in the prior art are not considered as final results sent by the recognition engine, i.e., the final results are not considered as certain results sent by the recognition engine. The final recognition result will be sent to the user terminal only when the recognition engine detects a speech pause that lasts for a certain period of time in the speaking process of a user. At this time, the recognition results sent by the recognition engine to the user terminal are certain recognition results. Additionally, it should be noted that in the prior art, the uncertain recognition texts with which the recognition engine responds to the user terminal are usually broken into different small sentences by punctuation marks, which include periods, question marks, commas, exclamation marks, semicolons, etc.

Since uncertain recognition text results with which the recognition engine responds to the user terminal will not be sent to the translation engine for translation and TTS synthesis, the waiting time of users will be relatively long before completing the translation and synthesis of speech finally, especially when the users speak continuously, which leads to low communication efficiency. Therefore, the improvement of the present disclosure lies in that before the user terminal receives the final results from the recognition engine, the user terminal performs detection and recognition on the uncertain recognition texts with which the recognition engine responds, which is specifically manifested as: the user terminal performs character detection on an uncertain recognition text with which the recognition engine responds each time; when it is detected that the number of characters is always less than n, the user terminal will not trigger the punctuation sentence-breaking detection until it is detected that the number of characters is greater than or equal to n for the first time, wherein n falls with a value range of (20, 50). In the embodiments of the present disclosure, the value of n is determined according to actual situations; preferably, the value of n is 30. For the convenience of description, the uncertain recognition text at this time is denoted as B1; the user terminal triggers the first punctuation sentence-breaking detection on the uncertain recognition text B1; subsequently, in the uncertain recognition text in the latest response, one punctuation sentence-breaking detection will be triggered every time n characters are added on the basis of the length of the uncertain recognition text B1; moreover, every time the sentence-punctuating detection is triggered successfully, the user terminal will perform a punctuation sentence-breaking detection action once; if the punctuation sentence-breaking detection of the user terminal meets sentence-punctuating conditions, then it is judged that the sentence breaking is successful, and the uncertain recognition text before the sentence breaking is recognized as a certain recognition text for this time.

Every time after determining the recognition text, the user terminal will send the certain recognition text that is determined for this time to the translation engine to perform translation and complete speech synthesis. Finally, the user terminal will play the synthesized speech.

In the embodiments of the present disclosure, every time the sentence-punctuating detection is triggered successfully, it is necessary to first determine whether the latest uncertain recognition text with which the recognition engine responds contains one or more certain recognition texts previously obtained through successful sentence breaking. If the latest uncertain recognition text contains no certain recognition texts obtained previously through successful sentence breaking, then it is directly judged whether the latest uncertain recognition text meets the punctuation sentence-breaking conditions; if the latest uncertain recognition text contains one or more certain recognition texts obtained previously through successful sentence breaking, similarities are first compared between the latest uncertain recognition text and said one or more certain recognition texts obtained previously through successful sentence breaking, said one or more certain recognition texts obtained previously are ignored, the remaining uncertain recognition text is extracted, and the punctuation sentence-breaking detection is performed on the extracted uncertain recognition text to judge whether the extracted uncertain recognition text meets the punctuation sentence-breaking conditions.

In the embodiments of the present disclosure, the punctuation sentence-breaking conditions are that during the detection of an uncertain recognition text ready for the punctuation sentence-breaking detection, if the uncertain recognition text ready for the punctuation sentence-breaking detection contains first-type sentence-breaking punctuation marks, then it is judged that the sentence breaking is successful. In the embodiments of the present disclosure, the number of successful sentence breaking while containing the first-type sentence-breaking punctuation marks may be one or more, but all of them are judged as successful sentence breaking. If the uncertain recognition text ready for the punctuation sentence-breaking detection contains one first-type sentence-breaking punctuation mark, then the first-type sentence-breaking punctuation mark at this time is a punctuation sentence-breaking point for this time, and the uncertain recognition text before the punctuation sentence-breaking point is determined as a certain recognition text for this time. If the uncertain recognition text ready for the punctuation sentence-breaking detection contains two or more first-type sentence-breaking punctuation marks, then the last first-type sentence-breaking punctuation mark is a punctuation sentence-breaking point for this time, and the uncertain recognition text before the punctuation sentence-breaking point is determined as a certain recognition text for this time. In the embodiments of the present disclosure, if the uncertain recognition text ready for the punctuation sentence-breaking detection contains no first-type sentence-breaking punctuation marks, then it is detected whether it contains second-type sentence-breaking punctuation marks; if the uncertain recognition text ready for the punctuation sentence-breaking detection contains two or more second-type sentence-breaking punctuation marks, then it is judged that the sentence breaking is successful at this time, the last second-type sentence-breaking punctuation mark is used as the punctuation sentence-breaking point at this time, and the uncertain recognition text before the punctuation sentence-breaking point is determined as a certain recognition text for this time; otherwise, it is determined that the sentence breaking fails. In other words, when there are neither first-type sentence-breaking punctuation marks nor two or more second-type sentence-breaking punctuation marks in the uncertain recognition text ready for punctuation sentence-breaking detection, then it is determined that the sentence breaking fails. If the sentence breaking fails, no new certain recognition text will be generated.

In the embodiments of the present disclosure, the first-type sentence-breaking punctuation marks are periods, exclamation marks, question marks, or semicolons, and the second-type sentence-breaking punctuation marks are commas.

In the embodiments of the present disclosure, the certain recognition text that is obtained through punctuation sentence-breaking each time will be sent to the translation engine for translation, and the translated text will be subjected to speech synthesis. To prevent excessive accumulation of TTS speech that has already been translated and synthesized and avoid users from waiting too long for the translated speech, the method in the present disclosure can also adjust the playing speed of TTS speech on the user terminal. In other words, when the text that has gone through speech synthesis but not been played through the user terminal has a string length of greater than or equal to 40, the user terminal will adjust the speech playing speed thereof to 1.5 times the default value; when the text that has gone through speech synthesis but not been played through the user terminal has a string length of less than 40, the user terminal adjusts the speech playing speed thereof to the default value.

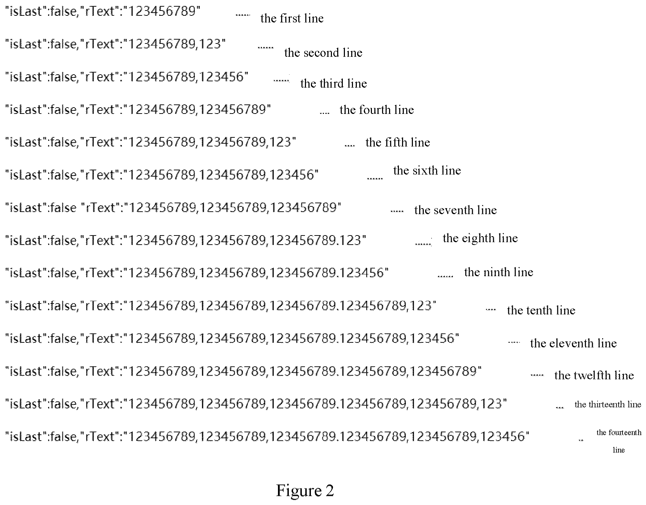

To provide a more detailed description of the purpose of the present disclosure, taking Figure 2 for example, "isLast":false,"rText" is an identifier for an uncertain recognition text, and Arabic numerals "123456789" (with punctuation marks included in subsequent lines) represent a recognition text. In Figure 2, each line are uncertain recognition results with which the recognition engine responds to the user terminal. After receiving an uncertain recognition text, the user terminal first performs character number detection on the uncertain recognition text. At this time, n is 20, as an example for description. Since the user terminal performs character number detection on the characters of the uncertain recognition texts in the first four lines and the number of characters in each of them is less than 20, the user terminal will not trigger the punctuation sentence-breaking detection. However, when it is detected that the number of characters in the fifth line exceeds 20, the first punctuation sentence-breaking detection is triggered on the uncertain recognition text "123456789,123456789,123" in the fifth line, and the user terminal performs the punctuation sentence-breaking detection on the uncertain recognition text in the fifth line. During the punctuation sentence-breaking detection, no period is found in the uncertain recognition text in the fifth line, i.e., there are no first-type sentence-breaking punctuation marks; at this time, it is impossible to break a sentence successfully; then, it is judged again whether the uncertain recognition text in the fifth line contains two or more commas, i.e., whether there are two or more second-type sentence-breaking punctuation marks; it is found that the uncertain recognition text in the fifth line contains two commas; at this time, the second comma is used as a punctuation sentence-breaking point for this time, and the recognition text before the second comma, "123456789123456789," is used as a certain recognition text for this time. Since less than 20 characters are added to the uncertain recognition texts from the sixth line to the ninth line as compared with the uncertain recognition text in the fifth line, the punctuation sentence-breaking detection will be triggered on none of lines from the sixth line to the ninth line. As compared with the uncertain recognition text in the fifth line, 20 characters are added to the uncertain recognition text in the tenth line; at this time, the punctuation sentence-breaking detection is triggered on the uncertain recognition text in the tenth line; when the user terminal performs the punctuation sentence-breaking detection on the uncertain recognition text in the tenth line, since the uncertain recognition text in the tenth line contains the certain recognition text "123456789,123456789," in the fifth line, which was determined previously through successful sentence-breaking, similarities are first compared between the uncertain recognition text in the tenth line and the certain recognition text "123456789,123456789,". Through the similarity comparison, the certain recognition text "123456789,123456789," as obtained previously is ignored from the uncertain recognition text in the tenth line "123456789,123456789,123456789.123456789,123", the remaining uncertain recognition text "123456789.123456789,123" is extracted, and the punctuation sentence-breaking detection is performed on the extracted uncertain recognition text "123456789.123456789,123"; at this time, as "123456789.123456789,123" contains one period, it is judged that the extracted uncertain recognition text meets the punctuation sentence-breaking conditions, and the part before the period, "123456789.", is used as the certain recognition text for this time. In the embodiments of the present disclosure, the certain recognition texts "123456789,123456789," or "123456789." will be sent to the translation engine to perform translation and complete speech synthesis, and finally, the user terminal will play the synthesized speech.

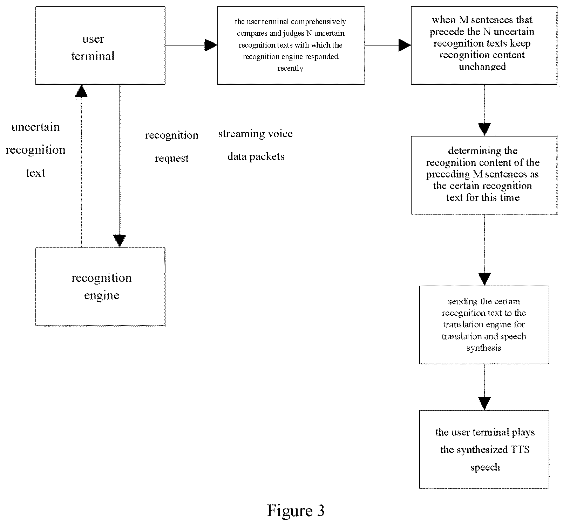

As shown in Figure 3, the present disclosure further provides another speech processing method for implementing streaming TTS, which method comprises:
a user beginning to speak and performing voice wake-up on a user terminal; the user terminal sending a speech recognition request to a recognition engine; after the speech recognition request is successful, the user terminal sending a streaming voice data packet to the recognition engine for speech recognition; the recognition engine continuously responding with uncertain recognition texts to the user terminal; the user terminal detecting and recognizing the uncertain recognition texts, which is specifically manifested as: after continuously receiving the uncertain recognition texts with which the recognition engine responds for multiple times, the user terminal comprehensively compares and judges N uncertain recognition texts in the recent responses, and n falls within a value range of (2, 6); when M sentences that precede the N uncertain recognition texts keep recognition content unchanged and M falls within a value range of (1, 5), it is determined that the recognition content of the preceding M sentences is a certain recognition text for this time; the user terminal sending the certain recognition text that is determined each time to the translation engine to perform translation and complete speech synthesis; finally, the user terminal playing the synthesized speech.

In the embodiments of the present disclosure, when the N uncertain recognition texts in the recent response to the user terminal contain one or more certain recognition texts that had been determined previously, similarities are compared between the N uncertain recognition texts in the recent responses and said one or more certain recognition texts that had been determined previously, said one or more certain recognition texts that had been determined previously is ignored, remaining parts of the N uncertain recognition texts are extracted, then the remaining parts of the N uncertain recognition texts are comprehensively compared and judged, and when M sentences that precede the remaining parts of the N uncertain recognition texts keep recognition content unchanged, the recognition content of the preceding M sentences is determined as the certain recognition text for this time. Likewise, in this method, the user terminal sends the certain recognition text to the translation engine for translation each time, and performs speech synthesis on the translated text; when the text that has gone through speech synthesis but not been played through the user terminal has a string length of greater than or equal to 40, the user terminal will adjust the speech playing speed thereof to 1.5 times the default value; when the text that has gone through speech synthesis but not been played through the user terminal has a string length of less than 40, the user terminal adjusts the speech playing speed thereof to the default value. Again, taking Figure 2 as an example for description, N takes the value of 5, and M takes the value of 2; since there are two sentences in none of the uncertain recognition texts in the first four lines, they are ignored. Starting from the uncertain recognition text in the fifth line to the uncertain recognition text in the tenth line, there are five uncertain recognition texts in between, and the uncertain recognition text in each line contains the same first two sentences of recognition text "123456789,123456789,"; at this time, "123456789,123456789," is determined as the certain recognition text. After the previously determined recognition text "123456789,123456789," is ignored from the uncertain recognition texts in the sixth line to the ninth line, the remaining uncertain recognition text does not have two sentences; thus, comprehensive comparison is not made therebetween. However, as there are still two or more sentences in the uncertain recognition texts in the tenth line to the fourteenth line after ignoring "123456789,123456789,", similarities are compared between the uncertain recognition texts in the tenth line to the fourteenth line and "123456789,123456789,"; moreover, as the certain recognition text "123456789,123456789," is ignored, the remaining uncertain recognition texts are comprehensively compared and judged, and it is found that they all have the same part "123456789.123456789"; at this time, the recognition text is used as the certain recognition text "123456789.123456789" for this time. In the embodiments of the present disclosure, the certain recognition texts "123456789,123456789," and "123456789.123456789" obtained in the method will be sent to the translation engine to perform translation and complete speech synthesis; finally, the user terminal will play the synthesized speech.

In summary, the present disclosure has the following advantages:
1. the present disclosure performs punctuation sentence-breaking detection on the uncertain recognition text with which the recognition engine responded recently through the user terminal, determines a part of certain recognition results in advance, and sends the recognition results that have been already determined to the translation engine in a streaming manner for translation and speech synthesis; in this way, it is realized that the user terminal can obtain or determine the recognition text in advance before the recognition engine responds with the certain recognition text or final recognition text, which reduces the waiting time of users before hearing the translated speech as compared with the existing manners, thereby achieving the effect of manual simultaneous interpretation;
2. the present disclosure further comprehensively compares and judges multiple uncertain recognition texts with which the recognition engine responded recently through the user terminal, and sends the recognition results that have been already determined to the translation engine in a streaming manner for translation and speech synthesis, which can also reduce the waiting time of users before hearing the translated speech, thereby achieving the effect of manual simultaneous interpretation;
3. by judging the string length of the text that has gone through speech synthesis but not been played through the user terminal, the present disclosure dynamically adjusts the playing speed of the TTS speech text, thereby reducing the playing time of the translated speech.

The above embodiments are preferred manners of implementation of the present disclosure, but the manners of implementation of the present disclosure are not limited by the above embodiments. Any other changes, modifications, substitutions, combinations, or simplifications that do not violate the spirit and principle of the present disclosure should be manners of equivalent substitution, and all fall within the scope of protection of the present disclosure.

## Claims

1. A speech processing method for implementing streaming TTS, which method comprises:
a user beginning to speak and performing voice wake-up on a user terminal; the user terminal sending a speech recognition request to a recognition engine; after the speech recognition request is successful, the user terminal sending a streaming voice data packet to the recognition engine for speech recognition; the recognition engine continuously responding with uncertain recognition texts to the user terminal;
**characterized in that** the user terminal detects and recognizes the uncertain recognition texts, which is specifically manifested as: the user terminal performs character detection on an uncertain recognition text with which the recognition engine responds each time; when it is detected that the number of characters is greater than or equal to n for the first time, n has a value of (20, 50); at this time, the uncertain recognition text is denoted as B1; the user terminal triggers the first punctuation sentence-breaking detection on the uncertain recognition text B1; subsequently, in the uncertain recognition text in the latest response, one punctuation sentence-breaking detection will be triggered every time n characters are added on the basis of the length of the uncertain recognition text B 1;
every time the sentence-punctuating detection is triggered successfully, the user terminal will perform a punctuation sentence-breaking detection action once; if the punctuation sentence-breaking detection of the user terminal meets sentence-punctuating conditions, it will be judged that the sentence breaking is successful, and the uncertain recognition texts before the sentence breaking will be recognized as a certain recognition text for this time;
every time after determining the recognition text, the user terminal will send the certain recognition text that is determined for this time to the translation engine to perform translation and complete speech synthesis; finally, the user terminal plays the synthesized speech.

2. The speech processing method for implementing streaming TTS according to claim 1, **characterized by** comprising: every time the sentence-punctuating detection is triggered successfully, first determining whether the latest uncertain recognition text with which the recognition engine responds contains one or more certain recognition texts previously obtained through successful sentence breaking; if the latest uncertain recognition text contains no certain recognition texts obtained previously through successful sentence breaking, then directly judging whether the latest uncertain recognition text meets the punctuation sentence-breaking conditions; if the latest uncertain recognition text contains one or more certain recognition texts obtained previously through successful sentence breaking, first comparing similarities between the latest uncertain recognition text and said one or more certain recognition texts obtained previously through successful sentence breaking, ignoring said one or more certain recognition texts obtained previously, extracting the remaining uncertain recognition text, and performing the punctuation sentence-breaking detection on the extracted uncertain recognition text to judge whether the extracted uncertain recognition text meets the punctuation sentence-breaking conditions.

3. The speech processing method for implementing streaming TTS according to claim 2, **characterized in that** the punctuation sentence-breaking conditions are that during the detection of an uncertain recognition text ready for the punctuation sentence-breaking detection, if the uncertain recognition text ready for the punctuation sentence-breaking detection contains first-type sentence-breaking punctuation marks, then it is judged that the sentence breaking is successful.

4. The speech processing method for implementing streaming TTS according to claim 3, **characterized in that** if the uncertain recognition text ready for the punctuation sentence-breaking detection contains one first-type sentence-breaking punctuation mark, then the first-type sentence-breaking punctuation mark at this time is a punctuation sentence-breaking point for this time, and the uncertain recognition text before the punctuation sentence-breaking point is determined as a certain recognition text for this time.

5. The speech processing method for implementing streaming TTS according to claim 3, **characterized in that** if the uncertain recognition text ready for the punctuation sentence-breaking detection contains two or more first-type sentence-breaking punctuation marks, then the last first-type sentence-breaking punctuation mark is a punctuation sentence-breaking point for this time, and the uncertain recognition text before the punctuation sentence-breaking point is determined as a certain recognition text for this time.

6. The speech processing method for implementing streaming TTS according to claim 3, **characterized in that** if the uncertain recognition text ready for the punctuation sentence-breaking detection contains no first-type sentence-breaking punctuation marks, then it is detected whether it contains second-type sentence-breaking punctuation marks; if the uncertain recognition text ready for the punctuation sentence-breaking detection contains two or more second-type sentence-breaking punctuation marks, then it is judged that the sentence breaking is successful at this time, the last second-type sentence-breaking punctuation mark is used as the punctuation sentence-breaking point at this time, and the uncertain recognition text before the punctuation sentence-breaking point is determined as a certain recognition text for this time; otherwise, it is determined that the sentence breaking fails.

7. The speech processing method for implementing streaming TTS according to any one of claims 3 to 6, **characterized in that** the first-type sentence-breaking punctuation marks include periods, exclamation marks, question marks, and semicolons.

8. The speech processing method for implementing streaming TTS according to claim 6, **characterized in that** the second-type sentence-breaking punctuation marks include commas.

9. The speech processing method for implementing streaming TTS according to claim 1, **characterized in that** the certain recognition text obtained through punctuation sentence-breaking each time will be sent to the translation engine for translation, and the translated text will be subjected to speech synthesis; when the text that has gone through speech synthesis but not been played through the user terminal has a string length of greater than or equal to 40, the user terminal will adjust the speech playing speed thereof to 1.5 times the default value; when the text that has gone through speech synthesis but not been played through the user terminal has a string length of less than 40, the user terminal adjusts the speech playing speed thereof to the default value.

10. A speech processing method for implementing streaming TTS, which method comprises:
a user beginning to speak and performing voice wake-up on a user terminal; the user terminal sending a speech recognition request to a recognition engine; after the speech recognition request is successful, the user terminal sending a streaming voice data packet to the recognition engine for speech recognition; the recognition engine continuously responding with uncertain recognition texts to the user terminal;
**characterized in that** the user terminal detects and recognizes the uncertain recognition texts, which is specifically manifested as: after continuously receiving the uncertain recognition texts with which the recognition engine responds for multiple times, the user terminal comprehensively compares and judges N uncertain recognition texts in the recent responses, and n falls within a value range of (2, 6); when M sentences that precede the N uncertain recognition texts keep recognition content unchanged and M falls within a value range of (1, 5), it is determined that the recognition content of the preceding M sentences is a certain recognition text for this time;
the user terminal sends the certain recognition text that is determined each time to the translation engine to perform translation and complete speech synthesis; finally, the user terminal plays the synthesized speech.

11. The speech processing method for implementing streaming TTS according to claim 10, **characterized in that** the method further comprises: when the N uncertain recognition texts in the recent response to the user terminal contain one or more certain recognition texts that had been determined previously, comparing similarities between the N uncertain recognition texts in the recent responses and said one or more certain recognition texts that had been determined previously, ignoring said one or more certain recognition texts that had been determined previously, extracting remaining parts of the N uncertain recognition texts, then comprehensively comparing and judging the remaining parts of the N uncertain recognition texts, and when M sentences that precede the remaining parts of the N uncertain recognition texts keep recognition content unchanged, determining the recognition content of the preceding M sentences as the certain recognition text for this time.

12. The speech processing method for implementing streaming TTS according to claim 10, **characterized in that** the user terminal sends the certain recognition text to the translation engine for translation each time, and performs speech synthesis on the translated text; when the text that has gone through speech synthesis but not been played through the user terminal has a string length of greater than or equal to 40, the user terminal will adjust the speech playing speed thereof to 1.5 times the default value; when the text that has gone through speech synthesis but not been played through the user terminal has a string length of less than 40, the user terminal adjusts the speech playing speed thereof to the default value.
